# EUROPÄISCHE PATENTSCHRIFT

(11) **EP 2 094 539 B1**
(45) Veröffentlichungstag und Bekanntmachung des Hinweises auf die Patenterteilung: **30.05.2012**
(21) Anmeldenummer: 07822322.9
(22) Anmeldetag: 07.11.2007
(51) Int. Cl.: B60R 21/231

(54) **GASSACK FÜR EIN KRAFTFAHRZEUG**
AIRBAG FOR A MOTOR VEHICLE
SAC À GAZ POUR UN VÉHICULE AUTOMOBILE

(30) Priorität: 22.11.2006 DE 202006017996 U
(43) Veröffentlichungstag der Anmeldung: 02.09.2009
(73) Patentinhaber: Takata-Petri AG, 63743 Aschaffenburg (DE)
(72) Erfinder: KLAIBER, Uwe, 89522 Heidenheim (DE); KNOBLAUCH, Michael, 89155 Erbach (DE)
(74) Vertreter: Baumgärtel, Gunnar
(86) Internationale Anmeldenummer: PCT/EP2007/062012
(87) Internationale Veröffentlichungsnummer: WO 2008/061888

(56) Entgegenhaltungen:
- EP-A- 0 800 959
- EP-A- 1 024 060
- WO-A1-97/46425
- DE-A1- 2 944 319
- JP-A- 7 205 738
- JP-A- 9 118 186
- JP-A- 9 249 085
- JP-A- 2005 199 987
- US-A- 5 454 595
- US-B1- 6 447 006

## Beschreibung

Die Erfindung betrifft einen Gassack für ein Kraftfahrzeug nach dem Oberbegriff des Anspruchs 1.

Derartige, bekannte Gassäcke weisen eine Gassackhülle auf, die zum Schutz einer Person mit Gas befüllbar ist und die zwei Hüllenabschnitte aufweist, die vor dem Aufblasen des Gassackes einander gegenüberliegen. Damit während bzw. nach dem Aufblasen des Gassackes Gas aus der Gassackhülle abgelassen werden kann, ist an einem der beiden Hüllenabschnitte der Gassackhülle eine Abströmöffnung vorgesehen, sowie ein Verbindungsmittel zum Ausbilden einer lösbaren Verbindung zwischen den beiden Hüllenabschnitten, die beim Aufblasen ein Entweichen von Gas durch die Abströmöffnung unterdrückt, wobei das Verbindungsmittel beim Aufblasen derart mit der Gassackhülle zusammenwirkt, dass die Verbindung gelöst wird und Gas aus der Abströmöffnung entweichen kann, wobei die beiden Hüllenabschnitte je eine separate Gassacklage bilden, die zur Ausbildung der Gassackhülle miteinander verbunden sind und die sich beim Aufblasen des Gassackes voneinander entfernen, und wobei die sich voneinander entfernenden Gassacklagen eine Kraft in das Verbindungsmittel in Form einer Reißnaht einleiten, die bewirkt, dass die Verbindung zwischen den Gassacklagen gelöst wird. Hierbei legt das Verbindungsmittel die beiden Gassacklagen derart aneinander fest, dass die beiden Gassacklagen zumindest eine erste Kammer und eine angrenzende zweite Kammer der Gassackhülle ausbilden. Dabei ist der Gassack bevorzugt dazu ausgebildet, zum Aufblasen über die erste Kammer mit Gas befüllt zu werden, wobei die Abströmöffnung an der zweiten Kammer ausgebildet ist.

Weiterhin ist ein Abdeckelement zum Abdecken der Abströmöffnung vorgesehen. Eine vollständige Gasdichtigkeit der mittels des Abdeckelementes verschlossenen bzw. abgedeckten Abströmöffnung ist nicht zwingend erforderlich. Entscheidend ist vielmehr, dass im geöffneten Zustand der Abströmöffnung eine vielfach größere Gasmenge aus dem Gassack durch die Abströmöffnung entweichen kann als bei einer verschlossenen Abströmöffnung.

Das Verbindungsmittel bewirkt auch eine lösbare Verbindung zwischen dem Abdeckelement und der ersten Gassacklage derart, dass das Abdeckelement an der Abströmöffnung anliegt, wobei das Verbindungsmittel dazu eingerichtet und vorgesehen ist, beim Aufblasen des Gassackes das Abdeckelement zum Öffnen der Abströmöffnung durch Lösen jener lösbaren Verbindung freizugeben, so dass Gas aus der Abströmöffnung entweichen kann. D.h. das Verbindungsmittel verbindet sowohl die beiden Gassacklagen miteinander - ggf. unter Ausbildung einer die Abströmöffnung beinhaltenden Kammer - als auch das Abdeckelement mit der ersten Gassacklage, so dass die lösbare Verbindung zwischen dem Abdeckelement und der ersten Gassacklage gelöst wird, wenn die sich beim Aufblasen voneinander entfernenden Gassacklagen eine vordefinierbare Kraft in das Verbindungsmittel einleiten. Ein derartiger Gassack ist aus der JP-A-2005199987 bekannt.

Der Erfindung liegt das Problem zugrunde, einen Gassack der eingangs genannten Art im Hinblick auf das Öffnen von Abströmöffnungen während des Aufblasvorganges zu verbessern.

Dieses Problem wird durch einen Gassack mit den Merkmalen des Anspruchs 1 gelöst. Danach ist vorgesehen, dass die durch das Verbindungsmittel gebildete lösbare Verbindung eine Unterbrechung aufweist, so dass beim Aufblasen bereits vor dem Lösen der Verbindung Gas aus der ersten Kammer in die zweite Kammer gelangen kann und von dort durch die Abströmöffnung aus dem Gassack entweichen kann. Bevorzugt ist das Verbindungsmittel dabei derart ausgebildet, dass nach einem Lösen der Verbindung eine signifikant größere Gasmenge pro Zeiteinheit während des Aufblasens aus der Abströmöffnung entweicht als vor dem Lösen der Verbindung.

Durch die Maßnahme, die beiden Gassacklagen einer Gassackhülle mittels des Verbindungsmittels lösbar miteinander zu verbinden, ist das Ablassen von Gas aus dem Gassack (Zeitpunkt der Öffnung der Abströmöffnung) mit Vorteil durch die relative Lage der lösbaren Verbindung in Bezug auf die beiden Gassacklagen steuerbar. Des Weiteren ist der Zeitpunkt der Öffnung der Abströmöffnung (Zeitpunkt des Lösens bzw. Zerstörens des Verbindungsmittels) über die Festigkeit des Verbindungsmittels selbst kontrollierbar. Bei einem Verbindungsmittel in Form einer Reißnaht beispielsweise wird diese Festigkeit durch die Länge der Reißnaht, das Nahtmaterial sowie den Querschnitt des Nahtmaterials bestimmt.

Befindet sich die lösbare Verbindung zwischen den Gassacklagen der Gassackhülle z.B. in einem Bereich der Gassackhülle, der beim Aufblasen des Gassackes bereits frühzeitig entfaltet wird, so kann eine entsprechend frühzeitige Öffnung der Abströmöffnung bewirkt werden, da die Verbindung entsprechend frühzeitig durch auseinanderstrebende Gassacklagenteile gelöst wird.

Liegt die lösbare Verbindung zwischen den Gassacklagen hingegen in einem Bereich der Gassackhülle, der beim Aufblasen des Gassackes erst spät zur Entfaltung gelangt, so öffnet sich die Abströmöffnung im Vergleich zur vorgenannten Position der lösbaren Verbindung der beiden Gassacklagen verhältnismäßig spät, wodurch eine schnelle und effiziente Positionierung des Gassackes bzw. der Gassackhülle bewirkt wird.

Es ist natürlich auch möglich, mehr als zwei einander gegenüberliegende Hüllenabschnitte bzw. Gassacklagen der Gassackhülle mittels des Verbindungsmittels, insbesondere in Form einer Reißnaht, miteinander zu verbinden. Beispielsweise besteht die Möglichkeit, eine Gassacklage mehrfach zu falten, um auf diese Weise eine Mehrzahl von einander gegenüberliegenden bzw. hintereinander angeordneten Hüllenabschnitten der Gassackhülle zu erhalten, die mittels des Verbindungsmittels (z.B. Reißnaht) miteinander verbunden werden.

Vorzugsweise erstreckt sich die durch das Verbindungsmittel gebildete lösbare Verbindung zwischen den beiden. Gassacklagen - bezogen auf einen flach ausgebreiteten Zustand der beiden Gassacklagen - zumindest abschnittsweise längs erstreckt entlang der Abströmöffnung, wobei sich die Verbindung bevorzugt ausgehend von einem äußeren Rand der Gassackhülle zumindest abschnittsweise entlang der Abströmöffnung erstreckt.

Bevorzugt weist die erste Kammer ein größeres Volumen auf als die zweite Kammer. Über das Volumen der ersten Kammer im Verhältnis zur zweiten Kammer ist der Zeitpunkt des Lösens der Verbindung bzw. des Öffnens der Abströmöffnung ggf. ebenfalls steuerbar. Je größer dabei das Volumen der ersten Kammer im Verhältnis zur zweiten Kammer ausfällt, desto länger dauert es, bis durch eine Befüllung der ersten Kammer eine ausreichende Kraft in das Verbindungsmittel einleitet werden kann, die die Verbindung der beiden Gassacklagen löst, so dass die zweite Kammer, an der die Abströmöffnung ausgebildet ist, eröffnet wird.

In einer alternativen Ausführungsform ist vorgesehen, dass die durch das Verbindungsmittel gebildete lösbare Verbindung zwischen den beiden Gassacklagen die erste Kammer von der zweiten Kammer derart abtrennt, dass vor dem Lösen der Verbindung kein Gas von der ersten Kammer in die zweite gelangen kann und somit aus der Abströmöffnung entweichen kann.

Bevorzugt sind die beiden Gassacklagen der Gassackhülle über ihre äußeren umlaufenden Ränder miteinander verbunden, wobei die zweite Kammer vorzugsweise je einen Abschnitt des äußeren Randes der ersten und der zweiten Gassacklage umfasst. Die Gassacklagen bestehen vorzugsweise aus einem Gewebe, einem Gewirk oder einem folienartigen Flächengebilde und sind vorzugsweise miteinander vernäht, verklebt oder verschweißt.

Das Verbindungsmittel zur Ausbildung der lösbaren Verbindung zwischen den Gassacklagen der Gassackhülle weist zumindest zwei lösbar miteinander verbundene Materialbereiche auf, die dazu ausgebildet sind durch Einleiten einer vordefinierbaren, die beiden Materialbereiche in entgegen gesetzte Richtungen vorspannenden Kraft voneinander separiert zu werden, so dass die Verbindung gelöst bzw. die zweite Kammer aufgelöst wird.

Bei derartigen Materialbereichen handelt es sich insbesondere durch miteinander einstückig verbundene Abschnitte einer Reißnaht oder einer Klebung (z.B. Silikon). Vor dem Aufblasen des Gassackes verbindet eine solche Reißnaht einerseits die beiden gegenüberliegenden Gassacklagen der Gassackhülle und ggf. ein Abdeckelement zum Abdecken der Abströmöffnung mit der ersten Gassacklage, so dass beim Aufblasen des Gassackes - hierbei werden die beiden Gassacklagen auseinander gedrängt - eine Kraft in die Reißnaht eingeleitet wird, die ein Einreißen der Reißnaht, d.h., ein Durchtrennen zweier miteinander verbundener Abschnitte (Materialbereiche) der Reißnaht bewirkt, so dass die Verbindung der beiden Gassacklagen gelöst wird.

Bevorzugt umläuft die mindestens eine Reißnaht - bezogen auf einen flach ausgebreiteten Zustand der beiden Gassacklagen - die Abströmöffnung zumindest teilweise, wobei sich die mindestens eine Reißnaht mit je einem freien Endabschnitt bevorzugt bis zum äußeren Rand der Gassackhülle erstreckt, der durch die aufeinanderliegenden umlaufenden Ränder der beiden Gassacklagen gebildet ist.

In einer alternativen Ausführungsform der Erfindung ist vorgesehen, dass das Verbindungsmittel durch zwei in einem spitzen Winkel zueinander verlaufende, jeweils vom äußeren Rand der Gassackhülle abgehende Reißnähte gebildet ist. Hierbei können die beiden Reißnähte einander schneiden, so dass die zweite Kammer, die durch ein Verbinden der beiden Gassacklagen mittels der Reißnähte ausgebildet wird, von der ersten Kammer vollständig getrennt ist. Alternativ hierzu können die beiden Reißnähte derart zueinander verlaufen, dass eine Lücke zwischen einander gegenüberliegenden Endabschnitten der Reißnähte ausgebildet wird, durch die hindurch schon vor dem Lösen der durch die Reißnähte bereitgestellten Verbindung Gas aus der ersten Kammer in die zweite Kammer gelangen kann und somit durch die Abströmöffnung aus dem Gassack entweichen kann.

In einer weiteren Variante der Erfindung wird das Verbindungsmittel durch zwei vom äußeren Rand der Gassackhülle abgehende Reißnähte und eine quer zu diesen Reißnähten verlaufende Reißnaht gebildet. Auch hier kann die quer verlaufende Reißnaht eine oder beide der anderen Reißnähte schneiden, um entweder eine vor dem Lösen der Verbindung gasdichte zweite Kammer bereitzustellen oder eine gasleitfähig mit der ersten Kammer verbundene zweite Kammer.

Vorzugsweise ist die an der zweiten Kammer vorgesehene Abströmöffnung an der ersten Gassacklage ausgebildet.

Bevorzugt überdeckt das Abdeckelement die Abströmöffnung der Gassackhülle von einem die Gassackhülle umgebenden Außenraum her, so dass das Abdeckelement, wenn es beim Aufblasen des Gassacks mit Gas beaufschlagt wird, das vom Innenraum her gegen das Abdeckelement strömt, von der Abströmöffnung abgehoben wird, sofern es nicht geeignet an einem Randbereich der Abströmöffnung bzw. an der ersten Gassacklage, in der die Abströmöffnung ausgebildet ist, festgelegt ist.

In einer Variante der Erfindung ist vorgesehen, dass das Abdeckelement über eine weiteres Verbindungsmittel, z.B. eine Naht, dauerhaft mit der ersten Gassacklage verbunden ist und über das lösbare Verbindungsmittel (z. B. eine Reißnaht) zusätzlich an der ersten Gassacklage festgelegt ist, so dass es nach einem Lösen der durch das Verbindungsmittel (Reißnaht) bereitgestellten lösbaren Verbindung zwischen den beiden Gassacklagen lediglich von der Abströmöffnung weggedrückt wird und diese weiterhin überdeckt. Oder anders gesagt, das Abdeckelement wird, nach dem die Verbindung zwischen den beiden Gassacklagen gelöst ist, durch Beaufschlagen mit Gas aus einer ersten Position, in der das Abdeckelement die Abströmöffnung verschließt, in eine zweite Position verlagert, in der das Abdeckelement derart bezüglich der Abströmöffnung angeordnet ist, dass Gas durch die Abströmöffnung aus der Gassackhülle in einen die Gassackhülle umgebenen Außenraum strömen kann.

Dabei liegt das Abdeckelement in der ersten Position bevorzugt mit einem ersten Bereich eng an einem die Abströmöffnung berandenden Randbereich der Abströmöffnung an. Hierdurch wird die Abströmöffnung hinreichend verschlossen, so dass allenfalls geringfügige Gasmengen durch die solchermaßen verschlossene Abströmöffnung aus der Gassackhülle entweichen können.

In der zweiten Position hingegen ist das Abdeckelement bevorzugt von der Abströmöffnung weggewölbt, so dass der erste Bereich des Abdeckelementes aufgrund der Wölbung des Abdeckelementes beabstandet zur Abströmöffnung im Außenraum vor der Abströmöffnung angeordnet ist.

Damit das in seiner ersten Position eng am Randbereich der Abströmöffnung anliegende Abdeckelement in seiner zweiten Position die vorgenannte Wölbung ausbildet, weist es in seiner ersten Position zumindest eine Falte auf, die das Abdeckelement in den ersten Bereich und einen mit dem ersten Bereich verbundenen zweiten Bereich unterteilt. Dabei ist die Falte in der ersten Position des Abdeckelementes mittels des Verbindungsmittels derart an der ersten Gassacklage fixiert, dass der erste Bereich des Abdeckelementes eng am Randbereich der Abströmöffnung anliegt und der zweite Bereich des Abdeckelementes als eine Zwischenlage zwischen dem ersten Bereich des Abdeckelementes und der ersten Gassacklage angeordnet ist.

Wird das Abdeckelement (nach dem Lösen des Verbindungsmittels) beim Aufblasen des Gassackes wie vorstehend beschrieben mit Gas beaufschlagt, so wird der erste Bereich des Abdeckelementes vom Randbereich der Abströmöffnung abgehoben, wobei das Abdeckelement unter Entfaltung seiner Falte seine vorgenannte Wölbung erhält. Durch die Falte wird also ein Materialvorrat des Abdeckelements, der zum Ausbilden der Wölbung notwendig ist, bereitgestellt. Natürlich können auch mehrere Falten an dem Abdeckelement vorgesehen sein.

Das Abdeckelement weist einen äußersten, umlaufenden Rand auf, über den es mittels einer Verbindung, insbesondere einer Naht, dauerhaft (fest) mit der ersten Gassacklage verbunden ist. Dabei ist die Verbindung abschnittsweise unterbrochen, so dass das Abdeckelement und die erste Gassacklage je einen Randbereich einer zwischen dem Abdeckelement und der ersten Gassacklage ausgebildeten Öffnung bilden, durch die hindurch - bei einem gelösten Verbindungsmittel - aus der Abströmöffnung austretendes Gas in den Außenraum der Gassackhülle entweichen kann. In der ersten Position des Abdeckelementes hingegen liegen die beiden Randabschnitte eng aneinander an.

In einem Ausführungsbeispiel der Erfindung ist das Abdeckelement flächig dreieckförmig ausgebildet. Dabei weist das Abdeckelement zwei einander angrenzende längs erstreckte äußere Ränder auf, über die das Abdeckelement vorzugsweise an der ersten Gassacklage festgelegt ist. Die beiden Ränder schließen vorzugsweise einen rechten Winkel ein. Ein verbleibender dritter, längs erstreckter Rand bzw. Randbereich, der die beiden aneinander angrenzenden Ränder des Abdeckelementes miteinander verbindet, ist dahingegen nicht mit der ersten Gassacklage verbunden, so dass die vorgenannte Öffnung zwischen dem Abdeckelement und der ersten Gassacklage ausgebildet wird. Die Falte, die das Abdeckelement in der ersten Position aufweist, ist dabei vorzugsweise entlang eines der beiden aneinander angrenzenden Ränder erstreckt, und verläuft vorzugsweise parallel zu jenem Rand, wobei sich die Falte bis zu jenem Randbereich des Abdeckelementes erstreckt, der die vorgenannte Öffnung begrenzt.

In einer alternativen Variante der Erfindung ist das Abdeckelement streifenförmig ausgebildet, wobei das Abdeckelement in diesem Fall bevorzugt über zwei einander gegenüberliegende Ränder an der ersten Gassacklage festgelegt ist. Dementsprechend bildet das streifenförmige Abdeckelement zusammen mit der ersten Gassacklage zwei einander gegenüberliegende Öffnungen aus, die jeweils durch einen Randbereich des Abdeckelementes und einen gegenüberliegenden Bereich der ersten Gassacklage begrenzt sind. Die besagte Falte verläuft dabei entlang einem der beiden einander gegenüberliegenden Ränder über die das streifenförmige Abdeckelement an der ersten Gassacklage festgelegt ist.

Vorzugsweise ist zumindest eine Reißnaht über die gesamte Abdecklage hinweg genäht, wobei die Reißnaht die vor dem Aufblasen übereinander liegenden Gassackteile, d.h. die beiden Gassacklagen der Gassackhülle sowie das Abdeckelement durchstößt.

Vorzugsweise verbindet die Reißnaht dabei auch den ersten Bereich des Abdeckelementes mit dem zweiten Bereich des Abdeckelementes, um die räumliche Lage der zumindest einen Falte des Abdeckelementes zu fixieren.

Bevorzugt ist das Abdeckelement als eine flexible Abdecklage ausgebildet, die insbesondere aus einem Gassackgewebe gefertigt ist, das mit einem für die Gassackhülle verwendeten Gewebe identisch ausgebildet sein kann.

In einem Ausführungsbeispiel der Erfindung sind auch an der zweiten Gassacklage Abströmöffnungen zum Ablassen von Gas aus der Gassackhülle vorgesehen. Derartige Abströmöffnungen liegen vorzugsweise - bezogen auf einen flach ausgebreiteten Zustand der beiden Gassacklagen - an der ersten Gassacklage ausgebildeten Abströmöffnungen deckungsgleich gegenüber. Für den Fall, das an der ersten Gassacklage mehrere Abströmöffnungen vorgesehen sind, sind diese ggf. vorzugsweise an der zweiten Kammer ausgebildet und werden ggf. ebenfalls durch das Abdeckelement abgedeckt.

Bevorzugt bildet die erste Gassacklage eine Aufprallfläche für eine zu schützende Person, in die die Person im Rückhaltefall eintaucht. Vorzugsweise ist der Gassack als ein Fahrerairbag, ein Beifahrerairbag oder ein Seitenairbag ausgebildet.

Die dargestellten Merkmale und Vorteile der Erfindung sollen anhand der nachfolgenden Figurenbeschreibung eines Ausführungsbeispieles verdeutlicht werden. Es zeigen:
- Fig. 1: eine schematische, ausschnitthafte Draufsicht auf einen flach ausgebreiteten Gassack, mit einer Abströmöffnung, die mittels Reißnähten verschlossen ist;
- Fig. 2: eine schematische, ausschnitthafte Draufsicht auf eine Abwandlung des in der Figur 1 gezeigten Gassackes;
- Fig. 3: eine schematische, ausschnitthafte Draufsicht auf eine weitere Abwandlung des in der Figur 1 gezeigten Gassackes;
- Fig. 4: eine schematische Draufsicht auf einen Gassack in Form eines Fahrerairbags, mit zwei Abströmöffnungen der in der Figur 1 gezeigten Art;
- Fig. 5: eine schematische Draufsicht auf einen Gassack in Form eines Kopfseitenairbags, mit zwei Abströmöffnungen der in der Figur 1 gezeigten Art;
- Fig. 6: eine schematische Draufsicht auf einen Gassack in Form eines Kopf-Thorax-Seitenairbags, mit zwei Abströmöffnungen der in der Figur 1 gezeigten Art;
- Fig. 7: eine schematische, ausschnitthafte Draufsicht auf einen flach ausgebreiteten Gassack, mit einer Abströmöffnung, die durch ein Abdeckelement in Form einer Abdecklage überdeckt ist, und
- Fig. 8: eine ausschnitthafte, perspektivische Ansicht des in der Figur 1 gezeigten Gassackes, mit einem gewölbten, die Abströmöffnung freigebenden Abdeckelement.
- Fig. 9: eine schematische, ausschnitthafte Draufsicht auf eine Abwandlung des in der Figur 7 bzw. 8 gezeigten Gassacks;
- Fig. 10: eine Draufsicht auf eine erste Gassacklage (Aufprallseite) eines flach ausgebreiteten Gassacks der in der Figur 6 gezeigten Art, mit durch ein Abdeckelement abgedeckten Abströmöffnungen, die an einer Kammer der Gassackhülle ausgebildet sind, wobei die Kammer durch Bereiche der Gassackhülle gebildet ist, die mittels Reißnähten miteinander verbunden sind.
- Fig. 11: ein Detail der in der Figur 10 gezeigten Ansicht;
- Fig. 12: eine rückwärtige Ansicht des in der Figur 10 gezeigten Gassackes; und
- Fig. 13: ein Detail der in der Figur 12 gezeigten Ansicht.

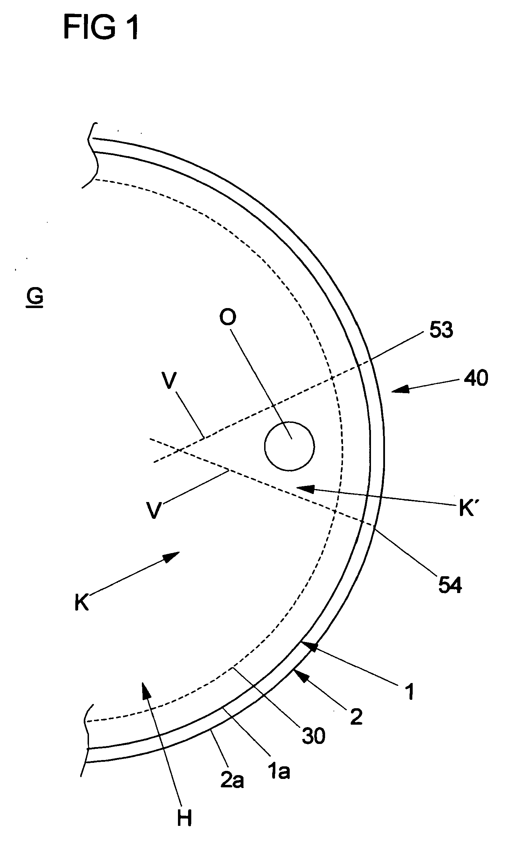

Figur 1 zeigt einen flächig in einer Ebene ausgebreiteten Gassack G, mit einer ersten Gassacklage 1 und einer zweiten Gassacklage 2, die jeweils einen äußeren, umlaufenden Rand 1a, 2a aufweisen, über den die beiden Gassacklagen 1, 2 miteinander verbunden sind, vorzugsweise über eine Naht 30, die sich entlang der äußeren, umlaufenden Ränder 1 a, 2a der beiden Gassacklagen 1, 2 erstreckt. Die beiden Gassacklagen 1, 2 bilden somit eine mit Gas befüllbare Gassackhülle H des Gassackes G aus. In der Figur 1 ist die zweite Gassacklage 2 durch die erste Gassacklage 1 verdeckt.

Die Gassackhülle H ist mittels eines nicht gezeigten Gasgenerators mit Gas befüllbar. Hierzu kann der Gasgenerator in einem von der Gassackhülle H umgebenen Innenraum des Gassackes G angeordnet sein, so dass vom Gasgenerator freigesetztes Gas direkt in die Gassackhülle H gelangt. Des Weiteren kann der Gasgenerator über eine geeignete Leitungsverbindung mit einer Einströmöffnung der Gassackhülle H verbunden sein. Ferner kann der Gasgenerator durch eine Einströmöffnung der Gassackhülle hindurch in den Innenraum der Gassackhülle hineinragen. Der Gassack G besteht vorzugsweise aus einem flexiblen Gassackgewebe, kann aber auch aus einem folienartigen Flächengebilde gefertigt sein.

Die Gassackhülle H weist eine an der ersten Gassacklage 1 ausgebildete Abströmöffnung O auf, durch die - in einem geöffneten Zustand - Gas aus der Gassackhülle H entweichen kann. Hierdurch wird das Energieabsorptionsverhalten des Gassackes G beim Eintauchen einer zu schützende Person in den aufgeblasenen Gassack G verbessert.

Die Gassackhülle H ist mittels zweier die beiden Gassacklagen 1, 2 miteinander verbindender Reißnähte V, die - in einem flach ausgebreiteten Zustand der Gassackhülle H - mit jeweils einem Endabschnitt 53, 54 von einem äußeren, durch die beiden aufeinander liegenden Ränder 1 a, 2a gebildeten Rand 40 der Gassackhülle H abgehen und einen spitzen Winkel einschließen, in eine erste Kammer K und eine kleinere zweite Kammer K' unterteilt, wobei die Abströmöffnung O an der zweiten Kammer K' ausgebildet ist.

Zum Aufblasen des Gassacks G wird Gas in einem von der ersten Kammer K' umgebenen Innenraum der Gassackhülle H freigesetzt. Durch den sich hierbei in der ersten Kammer K einstellenden Gasdruck werden die erste und die zweite Gassacklage 1, 2 auseinander gedrängt, wobei eine Kraft in die Reißnähte V eingeleitet wird, die die Reißnähte V schließlich zerstört. Hierdurch wird die durch die Reißnähte V gebildete Trennung der ersten und der zweiten Kammer K, K' aufgehoben und in der ersten Kammer K freigesetztes Gas kann durch die Abströmöffnung O hindurch aus der Gassackhülle H entweichen.

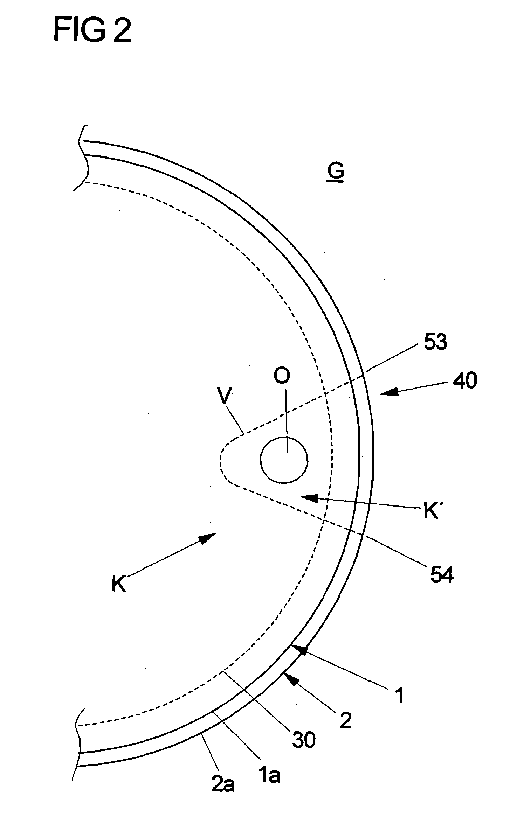

Figur 2 zeigt eine Abwandlung des in der Figur 1 gezeigten Gassackes G, bei dem im Unterschied zur Figur 1 die die Abströmöffnung O beinhaltende Kammer K' mittels einer durchgängigen Reißnaht V, die mit je einem Endabschnitt 53, 54 vom äußeren Rand 40 der - flach ausgebreiteten - Gassackhülle H abgeht und die Abströmöffnung O umgreift, von der angrenzenden ersten Kammer K abgeteilt ist.

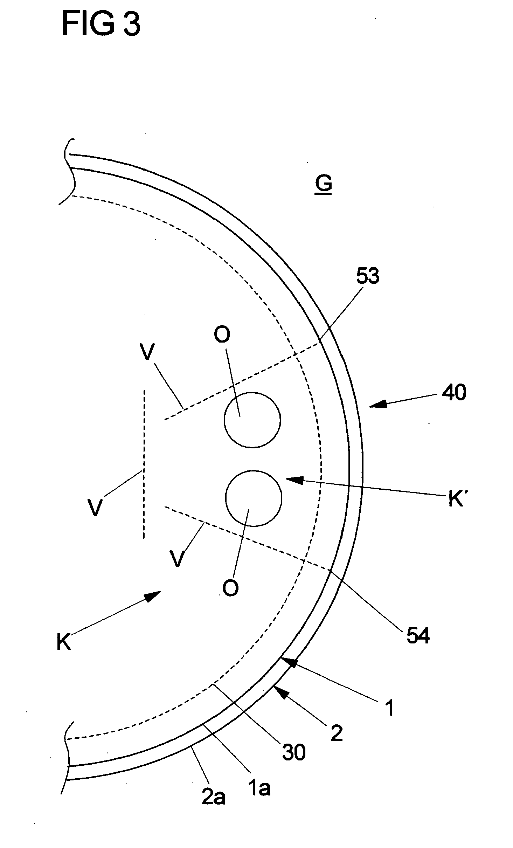

Figur 3 zeigt eine weitere Abwandlung des in der Figur 1 gezeigten flach ausgebreiteten Gassackes G, bei dem im Unterschied zur Figur 1 zwei benachbart zueinander an der ersten Gassacklage 1 ausgebildete Abströmöffnungen O vorgesehen sind. Des Weiteren wird im Unterschied zur Figur 1 die zweite Kammer K mittels dreier, die beiden Gassacklagen 1, 2 miteinander verbindender Reißnähte V von der ersten Kammer K abgeteilt, so dass die beiden Abströmöffnungen O an der zweiten Kammer K' ausgebildet sind. Dabei gehen zwei der drei Reißnähte V vom äußeren Rand 40 der Gassackhülle H ab und verlaufen zu beiden Seiten der Abströmöffnungen 2, so dass die beiden Abströmöffnungen O entlang des Randes 40 zwischen jenen Reißnähten V angeordnet sind. Eine dritte Reißnaht V verläuft quer zu den beiden vom Rand 40 abgehenden Reißnähten im Zusammenhang mit Figur 2, so dass die beiden Abströmöffnungen O zwischen der quer verlaufenden Reißnaht V und dem Rand 40 angeordnet sind.

Die quer verlaufende Reißnaht V ist zu den beiden anderen Reißnähten V beabstandet angeordnet, so dass die beiden Kammern K, K' bereits vor einem Einreißen der Reißnähte V gasleitend miteinander verbunden sind, d.h., in der ersten Kammer K freigesetztes Gas kann zwischen den Reißnähten V hindurch in die zweite Kammer K' gelangen. Von dort entweicht das beim Aufblasen in die zweite Kammer K' einströmende Gas durch die Abströmöffnungen O aus der Gassackhülle H.

Nach einem Lösen der Verbindung zwischen den beiden Gassacklagen 1, 2, d.h., nach einem Einreißen der Reißnähte V ist die zweite Kammer K' nicht mehr existent und Gas kann in signifikant größerem Ausmaß durch die Abströmöffnungen O hindurch aus der Gassackhülle H entweichen.

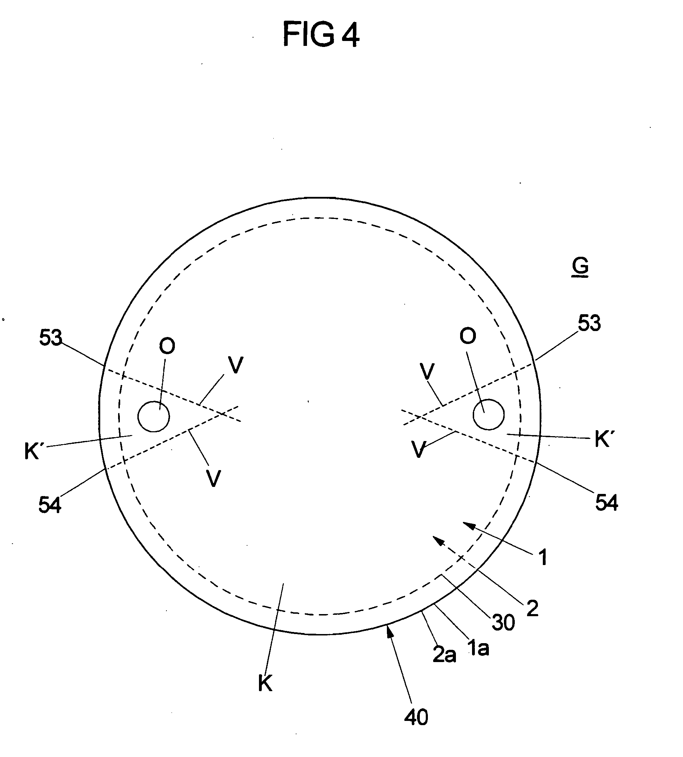

Die Figuren 4 bis 6 zeigen Abströmöffnungen O der in der Figur 1 gezeigten Art im Zusammenhang mit unterschiedlichen Gassackformen. Derartige Abströmöffnungen O mit dem oben beschriebenen Mechanismus zum zeitgesteuerten Ablassen von Gas aus der Gassackhülle H lassen sich vorteilhaft bei allen Gassäcken G einsetzen, die aus zwei entlang ihrer Umfänge verbundenen Gassacklagen 1, 2 gebildet sind.

Figur 4 zeigt einen Gassack G in Form eines Fahrerairbags in einem flach ausgebreiteten Zustand. Der Gassack G setzt sich aus einer kreisförmigen ersten und einer kongruent dazu ausgebildeten zweiten Gassacklage 2 zusammen, die entlang ihrer äußeren, umlaufenden Ränder 1a, 2a mittels einer Naht 30 miteinander verbunden sind, so dass eine mit Gas befüllbare Gassackhülle H des Gassacks G gebildet wird. Die zweite Gassacklage 2 ist in der Figur 4 durch die erste Gassacklage 1 verdeckt.

An zwei gegenüberliegenden Abschnitten des äußeren, umlaufenden Randes 40 der Gassackhülle H ist jeweils eine Abströmöffnung O in der ersten Gassacklage 1 ausgebildet, die in einem in ein Kraftfahrzeug eingebauten, entfalteten Zustand des Gassackes G einem zu schützenden Fahrer abgewandt ist, so dass der Fahrer nicht direkt von heißen, aus der Abströmöffnung O austretenden Gase getroffen wird.

Zum kontrollierten zeitgesteuerten Öffnen der beiden Abströmöffnungen O sind diese in zweiten Kammern K' der in der Figur 1 gezeigten Art vorgesehen, die spiegelsymmetrisch an der Gassackhülle H angeordnet sind.

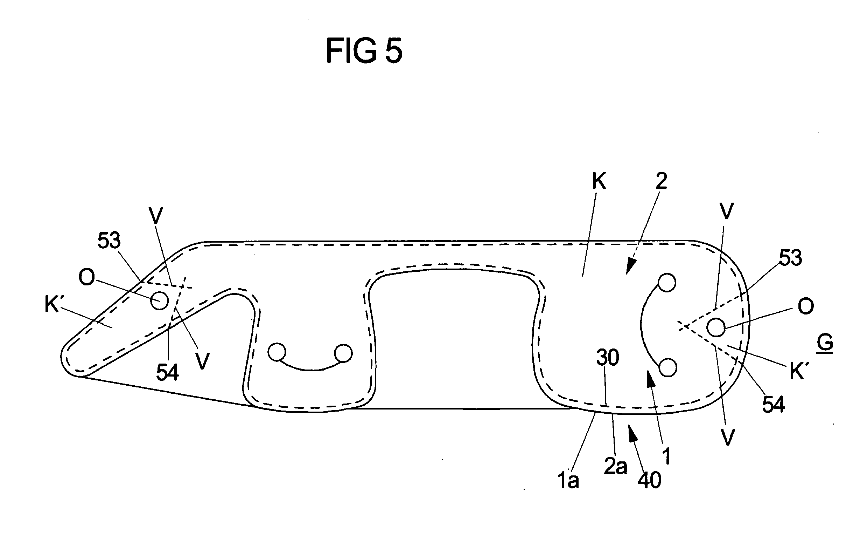

Figur 5 zeigt einen Kopfseitenairbag G, der dazu eingerichtet und vorgesehen ist, sich in einem entfalteten (aufgeblasenen) Zustand vom Innenraum eines Kraftfahrzeuges her vor den Fenstern einer seitlichen Karosserie des Kraftfahrzeuges zu erstrecken, d.h., zwischen A und C-Säule. Im entfalteten Zustand weist der Gassack G an einem entlang der A-Säule verlaufenden Bereich eine zweite Kammer K' der in der Figur 1 gezeigten Art mit einer Abströmöffnung O auf sowie eine weitere zweite Kammer K' der in der Figur 1 gezeigten Art an einem hinteren, benachbart zur C-Säule verlaufenden Bereich der Gassackhülle H des Gassacks G.

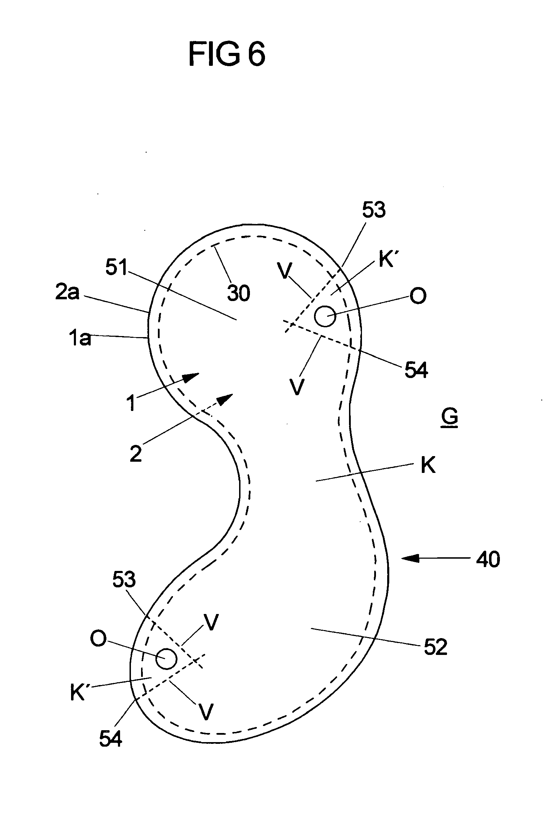

Figur 6 zeigt schließlich eine schematische Draufsicht auf eine Gassack G in Form eines Kopf-Thorax-Seitenairbags, der eine erste Gassacklage 1 und eine mit der ersten Gassacklage 1 über eine Naht 30 umfänglich verbundene zweite Gassacklage 2 aufweist, die zusammen eine mit Gas befüllbare Gassackhülle H des Gassackes G bilden. Die Gassackhülle H weist eine Kopfkammer 51 zum Schutz eines Kopfes eines Insassen auf und eine mit der Kopfkammer 51 verbundene Thoraxkammer 52, die zum Schutz des Brustbereiches des Insassen eingerichtet und vorgesehen ist.

Der Gassack G ist dazu ausgebildet, sich aus einer Sitzlehne eines Kraftfahrzeugsitzes heraus zu entfalten, wobei die Kopfkammer 51 entlang der vertikalen Fahrzeugachse oberhalb der Thoraxkammer 52 angeordnet wird. Beide Kammern 51, 52 erstrecken sich dabei entlang der Fahrzeugquerachse zwischen einer seitlichen Kraftfahrzeugkarosserie und einem zu schützenden Insassen. Hierbei ist die ersten Gassacklage 1 der Kraftfahrzeugkarosserie zugewandt. Zum kontrollierten Entlüften des Gassackes G weist die Thoraxkammer 52 eine Abströmöffnung O auf, die zum Schutz des Insassen vor heißen Gasen in der ersten Gassacklage 1 ausgebildet ist, und zwar am Rand 40 der Gassackhülle H. Die Abströmöffnung O ist mittels Reißnähten V der in der Figur 1 beschriebenen Art von der Gassackhülle H, d.h., der ersten Kammer K abgetrennt.

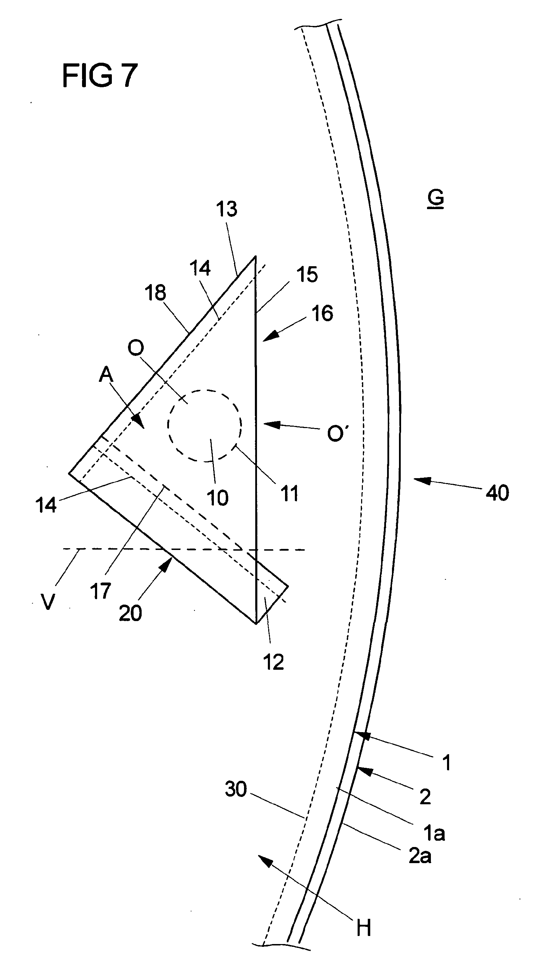

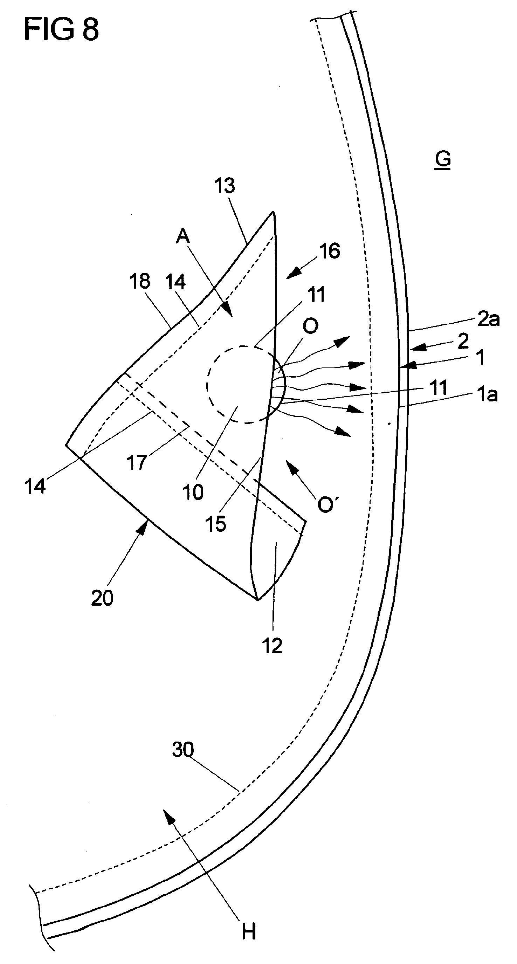

Figur 7 zeigt im Zusammenhang mit Figur 8 ein weiteres Ausführungsbeispiel bei dem im Unterschied zu den Figuren 1 bis 6 keine Unterteilung der Gassackhülle H in Kammern mittels einer oder mehrerer Reißnähte V erfolgt. Des Weiteren ist im Unterschied zu den Figuren 1 bis 6 ein Abdeckelement A zum Abdecken einer an der ersten Gassacklage 1 ausgebildeten Abströmöffnung O vorgesehen.

Bezogen auf den in der Figur 7 gezeigten, flach ausgebreiteten Zustand der Gassackhülle H, liegt der ersten Gassacklage 1 der Gassackhülle H quer zur Erstreckungsebene der Gassackhülle H die zweite Gassacklage 2 gegenüber, die beim Aufblasen des Gassackes G zumindest abseits des Randes 40 von der ersten Gassacklage 1 beabstandet wird, und zwar aufgrund einer durch das Aufblasen bewirken Ausdehnung der Gassackhülle H.

Die vorstehend beschriebene Beabstandung der beiden einander gegenüberliegenden Gassacklagen 1, 2 wird, wie nachfolgend beschrieben werden wird, vorliegend zum kontrollierten Öffnen der Abströmöffnung O ausgenutzt. Hierzu ist die Abströmöffnung O von einem die Gassackhülle H umgebenden Außenraum her mit einem im Wesentlichen dreieckförmigen Abdeckelement in Form einer Abdecklage A überdeckt. Das Abdeckelement A weist demzufolge zwei aneinander angrenzende längs erstreckte Ränder 17, 18 auf, die vorzugsweise quer zueinander verlaufen und über die das Abdeckelement A jeweils mittels einer Naht 14 mit der ersten Gassacklage 1 der Gassackhülle H fest verbunden ist.

Das Abdeckelement A weist ferner einen Randbereich 15 auf, der die beiden Ränder 17, 18 miteinander verbindet und nicht mit der ersten Gassacklage 1 der Gassackhülle H verbunden ist, sondern zusammen mit einem gegenüberliegenden Bereich 16 der ersten Gassacklage einer Öffnung O' begrenzt, so dass im Innenraum der Gassackhülle H befindliches Gas - sofern das Abdeckelement A nicht abdichtend an der Abströmöffnung O anliegt - durch die Abströmöffnung O hindurch gegen das die Abströmöffnung O überdeckende Abdeckelement A strömt und durch dieses über die Öffnung O' in den die Gassackhülle H umgebenden Außenraum geleitet wird.

Damit das die Abströmöffnung O überdeckende Abdeckelement A von der Abströmöffnung O wegbewegt werden kann, weist das Abdeckelement A eine entlang des einen Randes 17 verlaufende Falte 20 auf, die das Abdeckelement A in einen ersten Bereich 10 und einen mit dem ersten Bereich 10 verbundenen zweiten Bereich 12 unterteilt.

Zum Verschließen der Abströmöffnung O liegt der ersten Bereich 10 abdichtend an einem die Abströmöffnung O umrandenden Randbereich 11 an. Hierbei ist der erste Bereich 10 des Abdeckelementes A auf den zweiten Bereich 12 des Abdeckelementes A gefaltet, wobei der erste Bereich 10 des Abdeckelementes A unter Zwischenlage des entlang der Abströmöffnung O verlaufenden zweiten Bereiches 12 eng an der die Abströmöffnung O beinhaltenden ersten Gassacklage 1 der Gassackhülle H anliegt. Um diese erste Position des Abdeckelementes A, die das Abdeckelement A vor dem Aufblasen des Gassackes G bezüglich der Gassackhülle H einnimmt, zu fixieren, ist eine Reißnaht V über die Abdecklage A hinweg genäht, die zum einen das Abdeckelement A mit der ersten Gassacklage 1 verbindet und zum anderen die erste Gassacklage 1 mit der zweiten Gassacklage 2 verbindet. Des Weiteren verbindet die Reißnaht V den ersten Bereich 10 mit dem zweiten Bereich 12 des Abdeckelementes A, so dass die Falte 20 hinsichtlich ihrer räumlichen Lage in Bezug auf die Abströmöffnung O fixiert ist, und zwar derart, dass der erste Bereich 10 des Abdeckelementes A eng an dem die Abströmöffnung O berandenen Randbereich 11 anliegt, um die Abströmöffnung O zu verschließen.

Wird die Gassackhülle H nun mit Gas befüllt, so werden die beiden Gassacklagen 1, 2 der Gassackhülle H auseinander gedrängt, wodurch eine Kraft in die Reißnaht V eingeleitet wird, die die Reißnaht V zerstört. In der Folge bewirkt der vom Innenraum der Gassackhülle H her gegen den ersten Bereich 10 des Abdeckelementes A gerichtete Gasstrom, dass der erste Bereich 10 des Abdeckelementes A vom Randbereich 11 der Abströmöffnung O weggedrückt wird, wobei der eng anliegende Zustand aufgrund des Vorhandenseins der Falte 20 in einen gewölbten Zustand überführt wird, der die durch die beiden Randbereiche 15, 16 in der ersten Position verschlossene Öffnung O' freigibt. Durch diese Öffnung O' kann nun das aus der Abströmöffnung O strömende Gas in den Außenraum der Gassackhülle H geleitet werden.

Durch die mittels des Verbindungsmittels V bewirkte feste Lage der beiden Gassacklagen 1, 2 zueinander, kann die Gassackhülle H vor dem Aufblasen des Gassackes G beliebig gefaltet sein, ohne die Reproduzierbarkeit der Eröffnung der Abströmöffnung O wesentlich zu mindern. In dem in den Figuren 7 und 8 gezeigten Ausführungsbeispiel ist die Abströmöffnung O nahe des umlaufenden Randes 1a der ersten Gassacklage 1 ausgebildet. Im Falle eines rotationssymmetrischen Fahrerairbags (vgl. Figur 4), bei dem der Gasgenerator für gewöhnlich mittig bezüglich der beiden Gassacklagen 1, 2 angeordnet ist, bewirkt dies ein vergleichsweise spätes Öffnen der Abströmöffnung O, da sich die Gassackhülle H zunächst mittig und dann zu den Rändern 1 a, 2a hin ausdehnt.

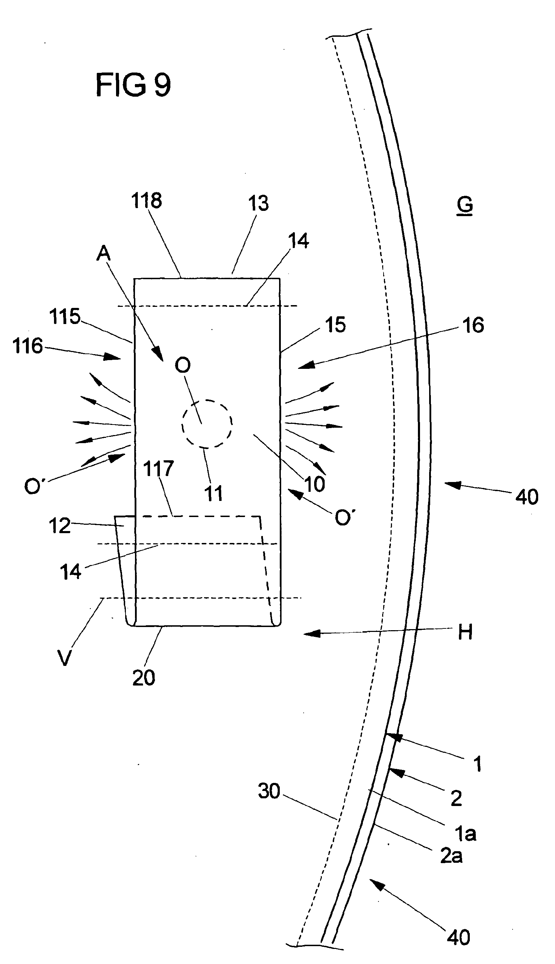

Figur 9 zeigt eine Abwandlung der in den Figuren 7 und 8 gezeigten Abdecklage A, die im Unterschied zur Figur 7 bzw. 8 nicht dreieckförmig sondern streifenförmig (rechteckförmig) ausgebildet ist. Dabei ist die streifenförmige Abdecklage A über zwei einander gegenüberliegende Ränder 117, 118 zu beiden Seiten der Abströmöffnung O mit der ersten Gassacklage 1. verbunden, so dass die Abdecklage A zwei einander entlang der Ränder 117, 118 gegenüberliegende Randbereiche 15, 115 bildet, die mit diesen Randbereichen 15, 115 gegenüberliegenden Bereichen 16, 116 der ersten Gassacklage 1 zwei einander gegenüberliegende Öffnungen O' begrenzen. Aus der Abströmöffnung O austretendes Gas kann daher entlang zweier einander entgegen gesetzter Richtungen zwischen dem Abdeckelement A und der ersten Gassacklage 1 hindurch aus den beiden Öffnungen O' ausströmen. Sowohl die Falte 20 als auch die Reißnaht V verlaufen entlang einer der beiden Ränder 117, 118 der Abdecklage.

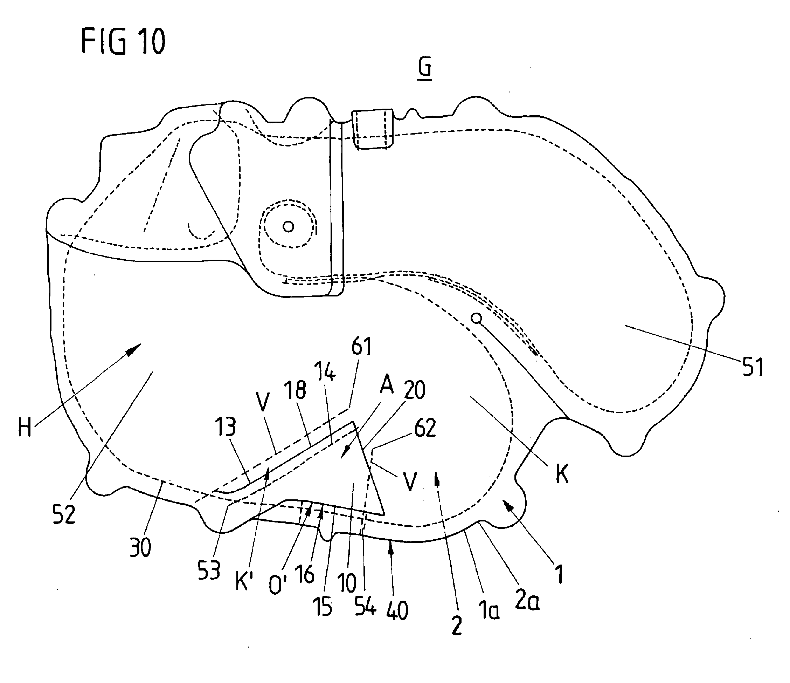

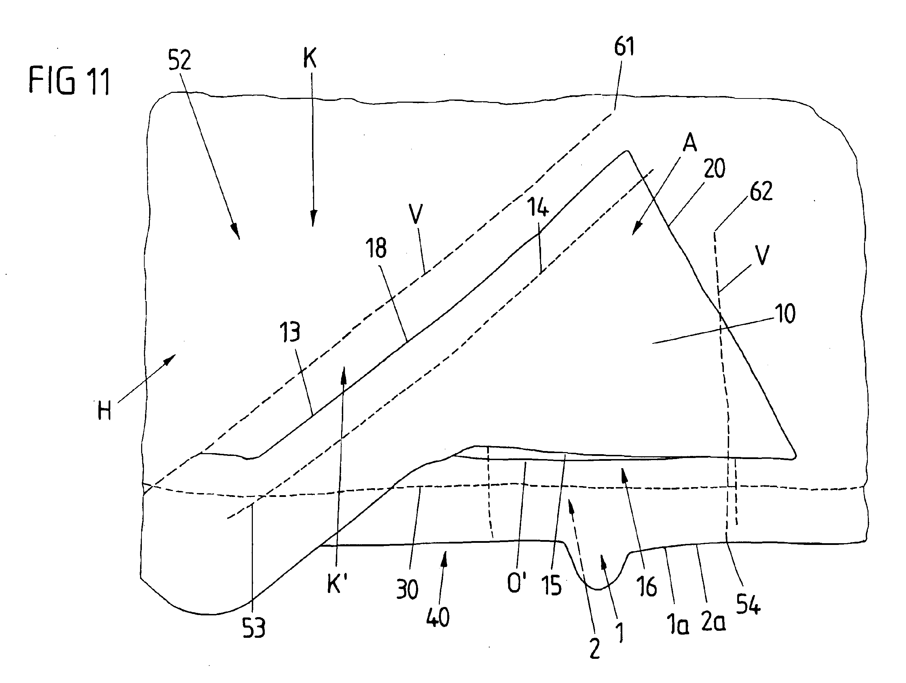

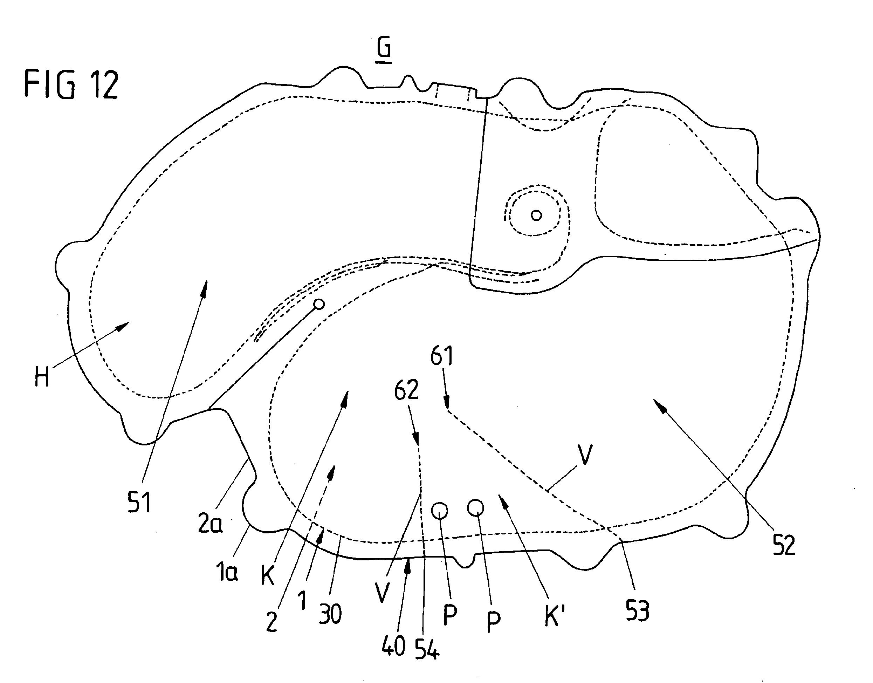

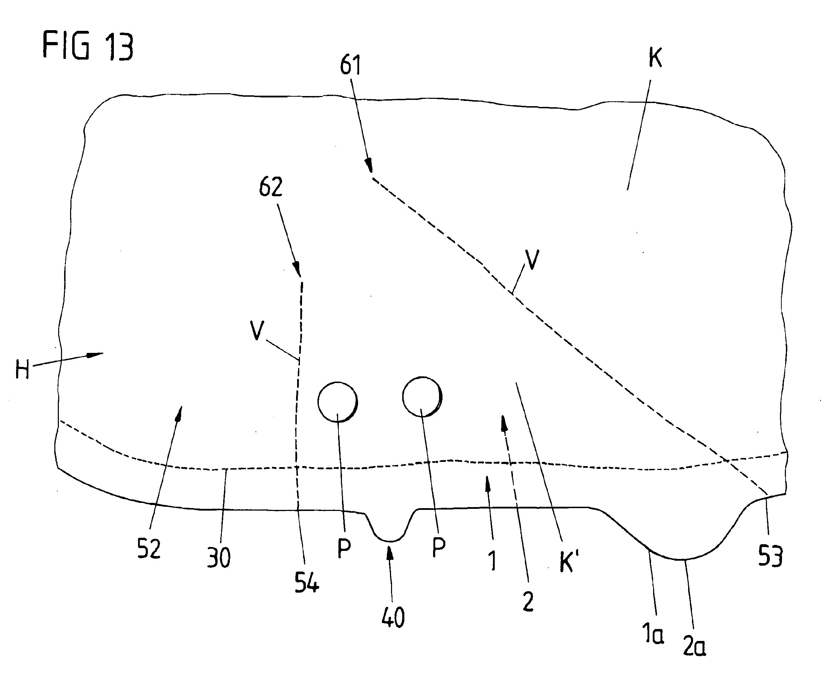

Figur 10 zeigt im Zusammenhang mit den Figuren 11 bis 13 einen Gassack G der in der Figur 6 gezeigten Art, bei dem an der Thoraxkammer 52 und zwar an der ersten Gassacklage 1 benachbart zum äußeren Rand 40 der Gassackhülle H zwei Abströmöffnungen O ausgebildet sind, die mit einem Abdeckelement der in den Figuren 7 und 8 gezeigten Art abgedeckt ist.

An der zweiten Gassacklage 2 sind ebenfalls zwei Abströmöffnungen P benachbart zueinander ausgebildet, wobei in einem flach ausgebreiteten Zustand der Gassackhülle H die beiden an der ersten Gassacklage 1 ausgebildeten Abströmöffnungen O jeweils mit einer an der zweiten Gassacklage 2 ausgebildeten Abströmöffnung P fluchten.

Das an der ersten Gassacklage 1 vorgesehene Abdeckelement A dient einerseits zum Verschließen der Abströmöffnungen O und andererseits zum Schutz eines Insassen, dem die ersten Gassacklage 1 zugewandt ist, indem aus den Abströmöffnungen O austretendes Gas durch die Abdecklage A umgelenkt wird, so dass den Insassen kein heißer, aus der Gassackhülle H ausströmender Gasstrom trifft. Da die zweite Gassacklage 2 der Gassackhülle H dem Insassen im Rückhaltefall abgewandt ist, ist ein an der zweiten Gassacklage 2 angeordnetes Abdeckelement A zum Abdecken der dort ausgebildeten Abströmöffnungen P nicht zwingend erforderlich.

Die an der zweiten Gassacklage 2 vorgesehen Abströmöffnungen P ermöglichen des Weiteren eine einfachere Herstellung des Gassackes G, da hierdurch die erste und die zweite Gassacklage 1, 2 als Gleichteile ausgebildet werden können.

Weiterhin weist der in den Figuren 10 bis 13 dargestellte Gassack G im Unterschied zu dem in den Figuren 7 und 8 gezeigten Gassack G eine zusätzliche, entlang des Randes 18 verlaufende Reißnaht V auf, die mit der über die Abdecklage A genähten Reißnaht V einen Spitzen Winkel einschließt, so dass eine zweite Kammer K' der in der Figur 1 gezeigten Art ausgebildet wird, die die Abströmöffnungen O, P beinhaltet. Im Unterschied zur Figur 1 schneiden sich die beiden Reißnähte V allerdings nicht, sondern bilden zwischen zwei freien, vom Rand 40 abgewandten Enden 61, 62 eine Lücke aus, d.h., eine Unterbrechung der lösbaren Verbindung zwischen den beiden Gassacklagen 1, 2, durch die hindurch bereits vor dem Einreißen der Reißnähte V in der ersten Kammer K freigesetztes Gas in die zweite Kammer K' und von dort durch die Abströmöffnungen O, P hindurch aus der Gassackhülle H entweichen kann.

Durch Einreißen der Reißnähte V als Folge der sich einstellenden Ausdehnung der Gassackhülle H beim Aufblasen des Gassackes G, wird einerseits die zweite Kammer K' vollständig eröffnet und andererseits das Abdeckelement A freigegeben, so dass es durch Beaufschlagung mit ausströmenden Gas in seine vorgewölbte zweite Position verlagert wird. Hierdurch wird die Gasmenge, die pro Zeiteinheit aus den Abströmöffnungen O, P austritt, signifikant erhöht.

## Patentansprüche

1. Gassack für ein Kraftfahrzeug, mit
- einem eine Gassackhülle aufweisenden, zum Schutz einer Person mit Gas befüllbaren Gassack (G),
- zwei einander gegenüberliegenden Hüllenabschnitten der Gassackhülle,
- einer an einem der beiden Hüllenabschnitte ausgebildeten Abströmöffnung (O) zum Ablassen von Gas aus dem Gassack (G),
- einem Verbindungsmittel (V) zum Ausbilden einer lösbaren Verbindung zwischen den beiden Hüllenabschnitten, wobei die Verbindung beim Aufblasen des Gassackes (G) einem Entweichen von Gas durch die Abströmöffnung (O) entgegenwirkt und wobei das Verbindungsmittel (V) beim Aufblasen des Gassackes (G) derart mit der Gassackhülle zusammenwirkt, dass die Verbindung gelöst wird und Gas aus der Abströmöffnung (O) entweichen kann, wobei
- die beiden Hüllenabschnitte je eine Gassacklage (1, 2) bilden, die zur Ausbildung der Gassackhülle miteinander verbunden sind und die sich beim Aufblasen des Gassackes (G) voneinander entfernen, und wobei
- die sich voneinander entfernenden Gassacklagen (1, 2) eine Kraft in das Verbindungsmittel (V) einleiten, so dass die Verbindung zwischen den beiden Hüllenabschnitten (1, 2) gelöst wird, wobei ein Abdeckelement (A) zum Abdecken der Abströmöffnung (O) vorgesehen ist, und wobei das Verbindungsmittel (V) eine lösbare Verbindung zwischen dem Abdeckelement (A) und der ersten Gassacklage (1) ausbildet derart, dass das Abdeckelement (A) an der Abströmöffnung (O) anliegt, wobei das Verbindungsmittel (V) dazu eingerichtet und vorgesehen ist, beim Aufblasen der Gassackes (G) das Abdeckelement (A) zum Öffnen der Abströmöffnung (O) durch Lösen jener lösbaren Verbindung freizugeben, so dass Gas aus der Abströmöffnung (O) entweichen kann, und wobei das Verbindungsmittel (V) durch zumindest eine die beiden Gassacklagen (1, 2) miteinander verbindende Reißnaht gebildet ist, die dazu eingerichtet und vorgesehen ist beim Einleiten einer vordefinierbaren Kraft einzureißen, so dass die Verbindung der beiden Gassacklagen (1, 2) gelöst wird, und wobei das Verbindungsmittel (V) die beiden Gassacklagen (1, 2) derart miteinander verbindet, dass die beiden Gassacklagen (1, 2) eine erste Kammer (K) und eine angrenzende zweite Kammer (K') der Gassackhülle (H) ausbilden,
**dadurch gekennzeichnet,**
**dass** die durch das Verbindungsmittel (V) gebildete lösbare Verbindung eine Unterbrechung aufweist, so dass vor dem Lösen der Verbindung Gas aus der ersten Kammer (K) über die zweite Kammer (K') durch die Abströmöffnung (O) hindurch aus dem Gassack (G) entweichen kann, wobei die durch das Verbindungsmittel (V) gebildete lösbare Verbindung derart ausgebildet ist, dass nach einem Lösen jener Verbindung eine signifikant größere Gasmenge pro Zeiteinheit während des Aufblasens aus der Abströmöffnung (O) entweicht als vor dem Lösen der Verbindung.

2. Gassack nach Anspruch 1, **dadurch gekennzeichnet, dass** der Gassack (G) dazu eingerichtet und vorgesehen ist, zum Aufblasen über die erste Kammer (K) mit Gas befüllt zu werden.

3. Gassack nach Anspruch 1 oder 2, **dadurch gekennzeichnet, dass** die Abströmöffnung (O) an der zweiten Kammer (K') ausgebildet ist, wobei die lösbare Verbindung zwischen den Gassacklagen (1, 2) ein Entweichen von Gas aus dem Gassack (G) durch die Abströmöffnung (O) verhindert oder begrenzt.

4. Gassack nach einem der vorhergehenden Ansprüche, **dadurch gekennzeichnet, dass** das Verbindungsmittel (V) durch zwei in einem spitzen Winkel zueinander verlaufende, jeweils vom äußeren Rand (40) der Gassackhülle (H) abgehende Reißnähte gebildet ist.

5. Gassack nach einem der vorhergehenden Ansprüche, **dadurch gekennzeichnet, dass** die Abströmöffnung (O) an der ersten Gassacklage (1) ausgebildet ist.

6. Gassack nach einem der vorhergehenden Ansprüche, **dadurch gekennzeichnet, dass** das Abdeckelement (A) die Abströmöffnung (O) vor dem Aufblasen flächig überdeckt, so dass das Abdeckelement (A) beim Aufblasen der Gassackes (G) mit Gas beaufschlagt wird, wobei insbesondere das Abdeckelement (A) dazu ausgebildet ist, aus der Abströmöffnung (O) austretendes Gas umzuleiten.

7. Gassack nach einem der vorhergehenden Ansprüche, **dadurch gekennzeichnet, dass** das Abdeckelement (A) dazu ausgebildet ist, durch Beaufschlagen mit Gas nach dem Freigeben des Abdeckelementes (A) aus einer ersten Position, in der das Abdeckelement (A) die Abströmöffnung (O) verschließt, in eine zweite Position verlagert zu werden, in der das Abdeckelement (A) derart bezüglich der Abströmöffnung (O) angeordnet ist, das Gas durch die Abströmöffnung (O) aus dem Gassack (G) entweichen kann, wobei insbesondere das Abdeckelement (A) in der ersten Position mit einem ersten Bereich (10) an einem die Abströmöffnung (O) berandenden Randbereich (11) der Abströmöffnung (O) anliegt, und wobei insbesondere das Abdeckelement (A) in der zweiten Position eine Wölbung aufweist, so dass der erste Bereich (10) des Abdeckelementes (A) beabstandet zur Abströmöffnung (O) vor der Abströmöffnung (O) angeordnet ist.

8. Gassack nach Anspruch 7, **dadurch gekennzeichnet, dass** das Abdeckelement (A) zum Ausbilden der Wölbung in der ersten Position eine Falte (20) aufweist, wobei insbesondere die Falte (20) das Abdeckelement (A) in der ersten Position in den ersten Bereich (10) und einen mit dem ersten Bereich (10) verbundenen zweiten Bereich (12) unterteilt.

9. Gassack nach Anspruch 8, **dadurch gekennzeichnet, dass** die Falte (20) vor dem Freigeben des Abdeckelementes (A) in der ersten Position des Abdeckelementes (A) mittels des Verbindungsmittels (V) an der ersten Gassacklage (1) fixiert ist, so dass der ersten Bereich (10) eng am Randbereich (11) der Abströmöffnung (O) anliegt, wobei der zweite Bereich (12) zwischen dem ersten Bereich (10) und der ersten Gassacklage (1) angeordnet ist.

10. Gassack nach einem der vorhergehenden Ansprüche, **dadurch gekennzeichnet, dass** das Abdeckelement (A) dreieckförmig ausgebildet ist.

11. Gassack nach einem der vorhergehenden Ansprüche, **dadurch gekennzeichnet, dass** die mindestens eine Reißnaht (V) über das Abdeckelement (A) genäht ist.

12. Gassack nach einem der vorhergehenden Ansprüche, **dadurch gekennzeichnet, dass** das Abdeckelement (A) flexibel ausgebildet ist, insbesondere aus einem Gassackgewebe.

13. Gassack nach Anspruch 5 oder einem der Ansprüche 6 bis 12 soweit rückbezogen auf Anspruch 5, **dadurch gekennzeichnet, dass** an der zweiten Gassacklage (2) eine Abströmöffnung (P) ausgebildet ist, die - bezogen auf einen flach ausgebreiteten Zustand der beiden Gassacklagen (1, 2) - mit der einen an der ersten Gassacklage (1) vorgesehenen Abströmöffnung (O) fluchtet.

## Claims

1. Airbag for a motor vehicle, comprising
- an airbag (G) having an airbag covering, which airbag can be filled with gas in order to protect a person,
- two covering sections of the airbag covering facing each other,
- a discharge opening (O) formed in one of the two covering sections for discharging gas out of the airbag (G),
- a connecting means (V) for forming a releasable connection between the two covering sections, wherein upon inflation of the airbag (G) the connection counters an escape of gas through the discharge opening (O), and wherein upon inflation of the airbag (G) the connecting means (V) interacts with the airbag covering in such a manner that the connection is released and gas can escape out of the discharge opening (O), wherein
- the two covering sections each form an airbag layer (1, 2) which are connected to each other for forming the airbag covering and which upon inflation of the airbag move away from each other, and wherein
- the airbag layers (1, 2) moving away from each other (1, 2) introduce a force into the connecting means (V) such that the connection between the two covering sections (1, 2) is released, wherein a covering element (A) for covering the discharge opening (O) is provided, and wherein the connecting means (V) forms a releasable connection between the covering element (A) and the first airbag layer (1) such that the covering element (A) butts against the discharge opening (O), wherein the connecting means (V) is adapted and provided to set free the covering element (A) upon inflation of the airbag (G) for opening the discharge opening (O) by releasing said releasable connection so that gas can escape out of the discharge opening (O), and wherein the connecting means (V) is formed by at least one tear seam connecting the two airbag layers (1, 2), which tear seam is adapted and provided for tearing upon introduction of a pre-definable force so that the connection of the two airbag layers (1, 2) is released, and wherein the connecting means (V) connects the two airbag layers (1, 2) in such a manner that the two airbag layers (1, 2) form a first chamber (K) and an adjacent second chamber (K') of the airbag covering (H),
**characterized in that**
the releasable connection formed by the connecting means (V) comprises a discontinuation, so that prior to the releasing of the connection, gas can escape from the first chamber (K) via the second chamber (K') through the discharge opening (O) out of the airbag (G) wherein the releasable connection formed by the connecting means (V) is formed in such a manner that after a releasing of said connection a significantly larger amount of gas escapes out of the discharge opening (O) per time unit during inflation than prior to the releasing of the connection.

2. Airbag according to claim 1, **characterized in that** the airbag (G) is adapted and provided for being filled with gas via the first chamber (K).

3. Airbag according to claim 1 or 2, **characterized in that** the discharge opening (O) is formed at the second chamber (K'), wherein the releasable connection between the airbag layers (1, 2) hinders or limits an escape of gas out of the airbag (G) through the discharge opening (O).

4. Airbag according to one of the preceding claims, **characterized in that** the connecting means (V) is formed by two tear seams running at an acute angle with respect to each other, each tear seam extending from the outer edge (40) of the airbag covering (H).

5. Airbag according to one of the preceding claims, **characterized in that** the discharge opening (O) is formed in the first airbag layer (1).

6. Airbag according to one of the preceding claims, **characterized in that** the covering element (A) laminarly covers the discharge opening (O) prior to inflation so that the covering element (A) is pressurized with gas upon inflation of the airbag (G), wherein particularly the covering element (A) is adapted to redirect gas that is discharged out of the discharge opening (O).

7. Airbag according to one of the preceding claims, **characterized in that** the covering element (A) is adapted to be displaced from a first position, in which the covering element (A) closes the discharge opening (O), into a second position, in which the covering element (A) is arranged with respect to the discharge opening (O) such that gas can escape out of the airbag (G) through the discharge opening (O), by means of pressurizing the covering element (A) with gas after the releasing of the covering element (A), wherein particularly in the first position the covering element (A) butts with a first area (10) against an edge area (11) of the discharge opening (O) that limits the discharge opening (O) and wherein particularly in the second position the covering element (A) comprises a bulge such that the first area (10) of the covering element (A) is arranged in front of the discharge opening (O) at a distance to the discharge opening (O).

8. Airbag according to claim 7, **characterized in that** in the first position the covering element (A) comprises a crease (20) for forming the bulge, wherein particularly in the first position the crease (20) divides the covering element (A) into the first area (10) and a second area (12) connected to the first area (10).

9. Airbag according to claim 8, **characterized in that** in the first position of the covering element (A) prior to the releasing of the covering element (A) the crease (20) is fixed to the first airbag layer (1) by means of the connecting means (V) such that the first area (10) tightly butts against the edge area (11) of the discharge opening (O), wherein the second area (12) is arranged between the first area (10) and the first airbag layer (1).

10. Airbag according to one of the preceding claim, **characterized in that** the covering element (A) is formed triangle-shaped.

11. Airbag according to one of the preceding claims, **characterized in that** the at least one tear seam (V) is sewn over the covering element (A).

12. Airbag according to one of the preceding claims, **characterized in that** the covering element (A) is formed flexible, particularly out of an airbag fabric.

13. Airbag according to claim 5 or one of the claims 6 to 12 as far as referred back to claim 5, **characterized in that** a discharge opening (P) is formed in the second airbag layer (2) that - related to an evenly outspread state of the two airbag layers (1, 2) - aligns with the discharge opening (O) provided in the first airbag layer (1).

## Revendications

1. Coussin de sécurité gonflable pour un véhicule automobile, comprenant
- un coussin gonflable (G) comprenant une enveloppe de coussin et susceptible d'être rempli avec du gaz pour la protection d'une personne,
- deux tronçons d'enveloppe opposés l'un de l'autre de l'enveloppe de coussin,
- une ouverture d'échappement (O), ménagée dans l'un des deux tronçons d'enveloppe et destinée à l'échappement de gaz hors du coussin gonflable (G),
- un organe de liaison (V) pour réaliser une liaison détachable entre les deux tronçons d'enveloppe, la liaison s'opposant, lors du gonflage du coussin gonflable (G), à un échappement de gaz à travers l'ouverture d'échappement (O), et l'organe de liaison (V) coopérant lors du gonflage du coussin gonflable (G) avec l'enveloppe de coussin de telle façon que la liaison est détachée et que le gaz peut s'échapper hors de l'ouverture d'échappement (O), dans lequel
- les deux tronçons d'enveloppe forment respectivement une couche de coussin gonflable (1, 2), qui sont reliées l'une à l'autre pour réaliser l'enveloppe de coussin et s'éloignent l'une de l'autre lors du gonflage du coussin gonflable (G), et dans lequel
- les deux couches de coussin gonflable (1, 2) qui s'éloignent l'une de l'autre exercent une force dans l'organe de liaison (V), de telle façon que la liaison entre les deux tronçons d'enveloppe (1, 2) est détachée, dans lequel il est prévu un élément de recouvrement (A) pour recouvrir l'ouverture d'échappement (O), et dans lequel l'organe de liaison (V) établit une liaison détachable entre l'élément de recouvrement (A) et la première couche de coussin gonflable (1) de telle manière que l'élément de recouvrement (A) s'applique contre l'ouverture d'échappement (O), et l'organe de liaison (V) est conçu et prévu pour, lors du gonflage du coussin gonflable (G), libérer l'élément de recouvrement (A) pour ouvrir l'ouverture d'échappement (O) par détachement de ladite liaison détachable, de sorte que le gaz peut s'échapper hors de l'ouverture d'échappement (O), et dans lequel l'organe de liaison (V) est formé par au moins une couture déchirable qui relie l'une à l'autre les deux couches de coussin gonflable (1, 2), couture qui est conçue et prévue pour se déchirer lors de l'application d'une force prédéfinie, de sorte que la liaison des deux couches de coussin gonflable (1, 2) est détachée, et dans lequel l'organe de liaison (V) relie les deux couches de coussin gonflable (1, 2) de telle façon que les deux couches de coussin gonflable (1, 2) forment une première chambre (K) et une seconde chambre adjacente (K') dans l'enveloppe de coussin (H),
**caractérisé en ce que**
la liaison détachable formée par l'organe de liaison (V) comporte une interruption de telle façon qu'avant le détachement de la liaison, du gaz peut s'échapper hors du coussin gonflable (G) depuis la première chambre (K) via la seconde chambre (K') en traversant l'ouverture d'échappement (O), et **en ce que** la liaison détachable formée par l'organe de liaison (V) est réalisée de telle façon que, pendant le gonflage, après un détachement de ladite liaison une quantité de gaz significativement plus élevée par unité de temps s'échappe hors de l'ouverture d'échappement (O) qu'avant le détachement de la liaison.

2. Coussin de sécurité gonflable selon la revendication 1, **caractérisé en ce que** le coussin gonflable (G) est conçu et prévu pour être rempli avec du gaz via la première chambre (K) en vue du gonflage.

3. Coussin de sécurité gonflable selon la revendication 1 ou 2, **caractérisé en ce que** l'ouverture d'échappement (O) est réalisée au niveau de la seconde chambre (K'), et la liaison détachable entre les couches de coussin gonflable (1, 2) empêche ou limite une fuite du gaz hors du coussin gonflable (G) à travers l'ouverture d'échappement (O).

4. Coussin de sécurité gonflable selon l'une des revendications précédentes, **caractérisé en ce que** l'organe de liaison (V) est formé par deux coutures déchirables, partant chacune de la bordure extérieure (40) de l'enveloppe de coussin (H) et convergeant l'une vers l'autre par un angle aigu.

5. Coussin de sécurité gonflable selon l'une des revendications précédentes, **caractérisé en ce que** l'ouverture d'échappement (O) est réalisée sur la première couche de coussin gonflable (1).

6. Coussin de sécurité gonflable selon l'une des revendications précédentes, **caractérisé en ce que** l'élément de recouvrement (A) recouvre l'ouverture d'échappement (O) sur toute sa surface avant le gonflage, de sorte que l'élément de recouvrement (A) est poussé avec le gaz lors du gonflage du coussin gonflable (G), et l'élément de recouvrement (A) est en particulier réalisé pour dévier le gaz sortant hors de l'ouverture d'échappement (O).

7. Coussin de sécurité gonflable selon l'une des revendications précédentes, **caractérisé en ce que** l'élément de recouvrement (A) est réalisé pour être déplacé, en étant poussé avec le gaz après libération de l'élément de recouvrement (A), depuis une première position dans laquelle l'élément de recouvrement (A) obture l'ouverture d'échappement (O), jusque dans une seconde position dans laquelle l'élément de recouvrement (A) est agencé par rapport à l'ouverture d'échappement (O) de telle façon que du gaz peut s'échapper hors du coussin gonflable (G) à travers l'ouverture d'échappement (O), et en particulier l'élément de recouvrement (A) s'applique, dans la première position, par une première région (10) contre une zone de bordure (11) de l'ouverture d'échappement (O) qui entoure l'ouverture d'échappement (O), et dans lequel en particulier l'élément de recouvrement (A) présente dans la seconde position un bombement de telle façon que la première région (10) de l'élément de recouvrement (A) est agencée à distance de l'ouverture d'échappement (O) devant l'ouverture d'échappement (O).

8. Coussin de sécurité gonflable selon la revendication 7, **caractérisé en ce que** l'élément de recouvrement (A) comporte un pli (20) pour réaliser le bombement dans la première position, et en particulier le pli (20) subdivise l'élément de recouvrement (A) dans la première position en la première région (10) et en une seconde région (12) reliée à la première région (10).

9. Coussin de sécurité gonflable selon la revendication 8, **caractérisé en ce que**, avant la libération de l'élément de recouvrement (A) dans la première position de l'élément de recouvrement (A), le pli (20) est fixé sur la première couche de coussin gonflable (1) au moyen de l'organe de liaison (V), de telle façon que la première région (10) s'applique étroitement contre la région de bordure (11) de l'ouverture d'échappement (O), et la seconde région (12) est agencée entre la première région (10) et la première couche de coussin gonflable (1).

10. Coussin de sécurité gonflable selon l'une des revendications précédentes, **caractérisé en ce que** l'élément de recouvrement (A) est réalisé en forme de triangle.

11. Coussin de sécurité gonflable selon l'une des revendications précédentes, **caractérisé en ce que** ladite au moins une couture déchirable (V) est cousue sur l'élément de recouvrement (A).

12. Coussin de sécurité gonflable selon l'une des revendications précédentes, **caractérisé en ce que** l'élément de recouvrement (A) est réalisé flexible, en particulier à partir d'un textile pour coussin gonflable.

13. Coussin de sécurité gonflable selon la revendication 5 ou selon l'une des revendications 6 à 12 quand elles dépendent de la revendication 5, **caractérisé en ce qu'**une ouverture d'échappement (P) est réalisée sur la seconde couche de coussin gonflable (2), ouverture qui, par référence à un état étalé à plat des deux couches de coussin gonflable (1, 2), est alignée avec l'ouverture d'échappement (O) réalisée sur la première couche de coussin gonflable (1).
